# EUROPÄISCHE PATENTSCHRIFT

(11) **EP 1 593 939 B1**
(45) Veröffentlichungstag und Bekanntmachung des Hinweises auf die Patenterteilung: **11.04.2012**
(21) Anmeldenummer: 05014403.9
(22) Anmeldetag: 10.10.2001
(51) Int. Cl.: G01D 18/00

(54) **Sensoranordnung zur Erfassung wenigstens eines Messwerts**
Sensor device for sensing at least one parameter
Dispositif de capteur pour la mesure d'au moins un paramètre

(30) Priorität: 02.11.2000 DE 10054288
(43) Veröffentlichungstag der Anmeldung: 09.11.2005
(62) Teilanmeldung aus: 01124085.0
(73) Patentinhaber: FESTO AG & Co. KG, 73734 Esslingen (DE)
(72) Erfinder: Wagner, Dietmar, 73230 Kirchheim (DE); Medow, Ralf, 73728 Esslingen (DE)
(74) Vertreter: Kocher, Mark Werner

(56) Entgegenhaltungen:
- WO-A-98/22781
- DE-A- 4 022 697
- US-A- 4 845 649

## Beschreibung

Die Erfindung betrifft eine Vorrichtung mit einer Sensoranordnung zur Erfassung wenigstens eines Messwerts, welche wenigstens ein sensitives Element aufweist, das über eine eine Speicheranordnung aufweisende Sensorelektronik mit einem Eingangs/Ausgangsport verbunden ist, mit einer wenigstens drei Leitungen aufweisenden Leitungsanordnung, durch die der Eingangs/Ausgangsport mit einem externen elektrischen oder elektronischen Gerät verbindbar ist, wobei zwei Leitungen als Spannungsversorgungsleitungen und wenigstens eine dritte Leitung als Sensorsignalleitung zur Übertragung von Sensorsignalen zum elektrischen oder elektronischen Gerät ausgebildet sind, und mit einer externen, mit der wenigstens einen Sensorsignalleitung verbindbaren Parametriereinrichtung zur Zuführung von Parametriersignalen zur Sensorelektronik, um die Sensoranordnung durch Speicherung von Parametrierwerten zu parametrieren.

Es besteht häufig der Wunsch, die Sensoreigenschaften derartiger Sensoranordnungen auch noch nach dem Einbau am Einsatzort einstellen oder verändern zu können, oder um die Sensoranordnung an sich geänderte Anforderungen anpassen zu können. Vor allem bei Sensoren mit sehr kleiner Bauform ist ein separater elektrischer Anschluss für eine derartige Parametrierung nicht möglich, und auch eine kabellose Verbindung zu einer Parametrierelektronik über Funk, Infrarot oder dergleichen scheidet aus Platz- und Kostengründen aus.

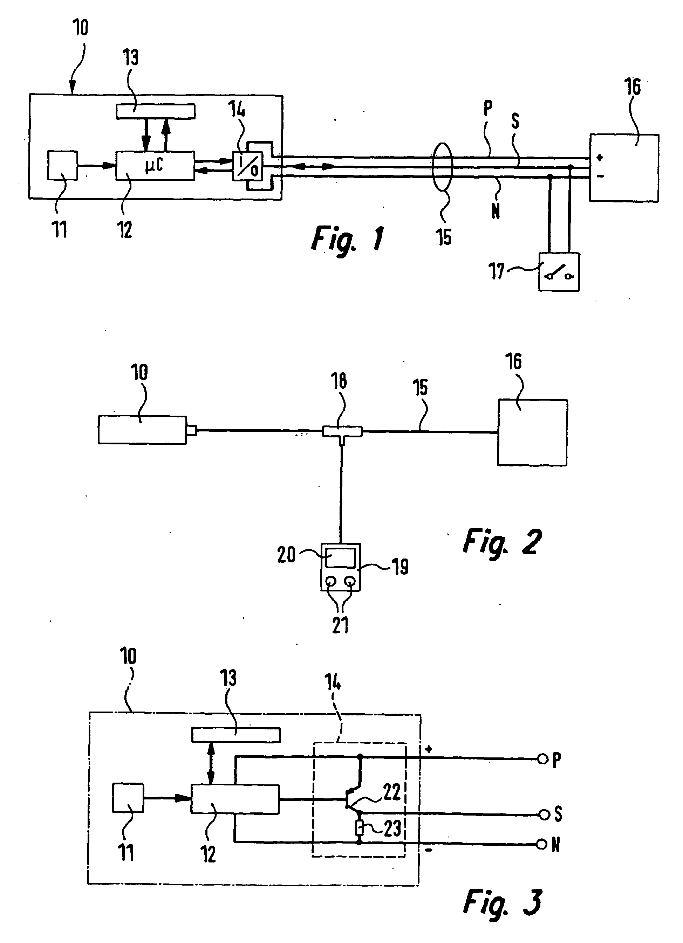

Aus der WO 98/22781 A ist eine Sensoranordnung mit den Merkmalen des Oberbegriffs des Anspruchs 1 bekannt, das jedoch ein sehr aufwendiges Justierverfahren und eine sehr aufwendige Hardware benötigt, wie sie dort beispielsweise in den Figuren 1 und 3 dargestellt und beschrieben ist.

Der Erfindung liegt daher die Aufgabe zugrunde, eine einfachere und kostengünstigere Justiereinrichtung bzw. Parametriereinrichtung für eine eine Sensoreinrichtung aufweinsende Vorrichtung zu schaffen.

Diese Aufgabe wird erfindungsgemäß durch eine eine Sensoranordnung aufweinsende Vorrichtung mit den Merkmalen des Anspruchs 1 gelöst.

In vorteilhafter Weise wird die ohnehin vorhandene wenigstens eine Sensorsignalleitung auch zur Parametrierung verwendet, so dass keine zusätzlichen Anschlussleitungen oder drahtlose Datenübertragungsmittel erforderlich sind. Die externe Parametriereinrichtung kann bei Bedarf an die wenigstens eine Sensorsignalleitung angeschlossen werden und Parametriersignale übertragen, wobei dann daraus abgeleitete Parametrierwerte in der Sensoranordnung gespeichert werden. Auch eine Veränderung der Sensoreigenschaften kann dadurch noch leicht nachträglich durchgeführt werden. Die erfindungsgemäße Parametrierung der Sensoranordnung erfolgt auf sehr einfache Art, indem nämlich der jeweils augenblicklich anliegende Messwert als Schalt- oder Schwellwert in die Speicheranordnung übernommen wird, so dass ab diesem Zeitpunkt ein Sensorsignal erzeugt wird, wenn der augenblickliche Messwert in diesem Speicherwert übereinstimmt. Hierdurch kann beispielsweise die Parametriereinrichtung als einfacher Schalter oder Taster ausgebildet sein, durch den ein Speicherbefehl für den augenblicklich anliegenden Messwert erzeugt wird.

Durch die in den Unteransprüchen aufgeführten Maßnahmen sind vorteilhafte Weiterbildungen und Verbesserungen der im Anspruch 1 angegebenen Sensoranordnung möglich.

In einer einfachen Ausführung der Parametriereinrichtung ist diese als Teach-in- oder Kurzschlussschalter ausgebildet.

Die Parametriereinrichtung kann in einer weiteren Ausführung als Eingangsmodul in einem externen elektronischen Gerät angeordnet oder als separates Parametriergerät ausgebildet sein, das vorzugsweise mit einem Display und Bedienungselementen versehen ist, um auch aufwendigere Parametriereinstellungen vornehmen zu können.

Die Parametriereinrichtung ist vorzugsweise zur Übertragung von Parametriersignalen, wie die Einstellung von Schaltpunkten, Sensor- und/oder Schaltfunktionen, Sensor- und/oder Schaltcharakteristiken, Schaltzeiten, Sensoransprechschwellen, Hysteresen oder Fensterfunktionen, ausgebildet.

In einer bevorzugten Ausführung liegen die Sensorsignale digital in Form von wenigstens zwei unterschiedlichen Signalpegeln vor, wobei die Signalpegel der überlagerten Parametriersignale vorzugsweise derart kleiner als die Sensorsignalpegel sind, dass sie bei der Erkennung der Sensorsignalpegel unbeachtlich sind. Hierdurch wird erreicht, dass die Sensorsignalerkennung nicht durch die Parametriersignale beeinflusst wird.

Zur Parametrierung eignet sich bevorzugt ein festgelegtes, in beiden Richtungen wechselnd ablaufendes Parametrier-Protokoll. Dieses besitzt zweckmäßigerweise ein durch die Sensorelektronik überprüfbares Startbit, wobei Mittel zur Beibehaltung des augenblicklich anliegenden Sensorsignals während einer festlegbaren Erkennungszeit vorgesehen sind, um zu verhindern, dass während des Startbits eine Veränderung des Sensorsignalpegels erfolgt.

Die Sensorelektronik besitzt weiterhin vorteilhafterweise Mittel zur Beibehaltung des augenblicklich anliegenden Sensorsignals für eine vorgebbare Zeit während der Parametrierung, die größer als ein Sendezyklus des Parametrier-Protokolls ist. Hierdurch wird verhindert, dass ein Sendezyklus durch einen Signalwechsel des Sensorsignals in unerwünschter Weise beeinflusst wird.

Ausführungsbeispiele der Erfindung sind in der Zeichnung dargestellt und in der nachfolgenden Beschreibung näher erläutert. Es zeigen:
- Fig. 1: eine schematische Darstellung einer an ein elektrisches Gerät angeschlossenen Sensoranordnung mit einem Kurzschlussschalter zur Teach-in-Parametrierung,
- Fig. 2: die mit dem elektrischen Gerät über eine Leitungsanordnung verbundene Sensoranordnung mit einem an diese Leitungsanordnung angeschlossenen Parametriergerät und
- Fig. 3: eine schaltungsmäßige Ausgestaltung des Eingangs/Ausgangsports der Sensoranordnung.

Gemäß Fig. 1 enthält eine Sensoranordnung 10 ein Sensorelement 11, das beispielsweise als Hall-Element, Feldplatte, fotosensitives Element, Piezoelement, temperatursensitives Element, drucksensitives Element, Kraftaufnehmer oder dergleichen ausgebildet ist.

Dieses Sensorelement ist an eine im Ausführungsbeispiel als Mikrocomputer ausgebildete Sensorelektronik 12 angeschlossen, die ihrerseits mit einer Speicheranordnung 13 und einem Eingangs/Ausgangsport 14 verbunden ist. Dieser ist über eine aus drei Leitungen P, S, N bestehende Leitungsanordnung 15, die das Sensoranschlusskabel darstellt, mit einem elektrischen oder elektronischen Gerät 16 verbunden, dem die Sensorsignale zu Steuer-, Regel- und/oder Anzeigezwecken zugeführt werden. Die Leitungsanordnung 15 besteht aus zwei Spannungsversorgungsleitungen PN sowie einer Sensorsignalleitung S, wobei auch eine größere Zahl von Sensorsignalleitungen vorgesehen sein kann. Die beiden Spannungsversorgungsleitungen PN dienen zur Spannungsversorgung des Eingangs/Ausgangsports 14 sowie der übrigen elektronischen Komponenten der Sensoranordnung 10. Die Sensorsignalleitung S ist über einen Kurzschlussschalter 17 bzw. -taster mit der Spannungsversorgungsleitung N verbunden, beispielsweise lösbar verbunden.

Im Normalbetrieb werden die im Sensorelement 11 erzeugten Sensorsignale in der Sensorelektronik 12 aufgearbeitet und über den Eingangs/Ausgangsport 14 dem elektrischen Gerät 16 übermittelt. Dabei kann in der Speicheranordnung 13 auch ein Schaltgrenzwert für den jeweils erfassten Messwert gespeichert sein, wobei die Sensoranordnung 10 oberhalb dieses Schaltgrenzwerts ausgangsseitig ein High-Signal erzeugt, während darunter ein Low-Signal anliegt. Darüber hinaus kann mittels zweier Schaltgrenzwerte auch eine Schalthysterese vorgegeben werden.

Zur Speicherung einer oder mehrerer Schaltgrenzwerte in der Speicheranordnung 12 dient der als Teach-in-Schalter ausgebildete Kurzschlussschalter 17, der bei Bedarf an die Leitungsanordnung 15 anschließbar ist oder auch dort belassen werden kann. Soll der augenblicklich anliegende Messwert als Schaltgrenzwert übernommen werden, so wird der Kurz-schlussschalter 17 betätigt. Das bei der Betätigung erfolgende Kurzschließen der Sensorsignalleitung S mit der Spannungsversorgungsleitung N wird durch die Sensorelektronik erfasst, und der entsprechende Messwert wird in die Speicheranordnung 13 als Schaltgrenzwert übernommen. Entsprechend können auch zwei Messwerte als Schaltgrenzwerte für ein Schalten mit Hysterese übernommen werden, beispielsweise durch zwei aufeinanderfolgende Betätigungen des Kurzschlussschalters 17.

Bei dem in Fig. 2 dargestellten zweiten Ausführungsbeispiel sind die Sensoranordnung 10 und das damit über die Leitungsanordnung 15 verbundene elektrische Gerät 16 entsprechend aufgebaut, jedoch vereinfacht dargestellt. Über eine Leitungsverzweigung 18 in der Leitungsanordnung 15 ist ein Parametriergerät 19 angeschlossen, das ein Display 20 und Bedienelemente 21 besitzt. Dieses Parametriergerät 19 kann an einer beliebigen Stelle der Leitungsanordnung 15 angeschlossen werden, zum Beispiel auch an den beiden Endbereichen.

Die Sensoranordnung 10 kann beispielsweise unparametriert am Einsatzort montiert werden. Die Parametrierung kann dann anschließend mittels des Parametriergeräts 19 durchgeführt werden. Weiterhin kann eine ursprünglich eingegebene oder durch das Parametriergerät 19 eingegebene Parametrierung nachträglich geändert werden. Der Ablauf der Parametrierung wird im folgenden anhand der Sensoranordnung 10 gemäß Fig. 3 beschrieben, bei der der Eingangs/Ausgangsport 14 durch einen Schalttransistor 22 realisiert ist, dessen Basis mit einem Ausgang der Sensorelektronik 12, dessen Emitter an die positive Spannungsversorgungsleitung P und dessen Kollektor über einen Widerstand 23 mit der negativen Spannungsversorgungsleitung N verbunden ist. Die Sensorsignalleitung S ist an den Kollektor dieses Schalttransistors 22 angeschlossen.

Durch den Schalttransistor 22 weist die Sensoranordnung 10 je nach physikalischer Eingangsgröße (Messwert) zwei Zustände am mit der Sensorsignalleitung verbundenen Ausgang auf, nämlich zum einen ein Potential nahe Null durch den Widerstand 23 (Ausgang gesperrt) und zum anderen ein Potential unterhalb des Pluspotentials (z.B. 24V) über den durchgesteuerten Transistor (Ausgang geschaltet). Diese beiden Zustände werden im elektrischen Gerät 16 dahingehend interpretiert, dass sich der Messwert unterhalb des Schaltgrenzwerts oder darüber befindet.

Das an die Leitungsanordnung 15 angeschlossene Parametriergerät 19 erkennt ebenfalls den Schaltzustand der Sensoranordnung 10 entsprechend. Die Parametrierung erfolgt nun durch Senden von Informationsbits an die Sensoranordnung 10. Dabei wird das Potential jeweils um einen Spannungswert von zum Beispiel 2 Volt angehoben. Dadurch ergeben sich vier mögliche Zustände auf der Sensorsignalleitung S:

| | | |
|---|---|---|
| Ausgang gesperrt. | Parametriersignal Low | 0 Volt |
| Ausgang gesperrt. | Parametriersignal High | 2 Volt |
| Ausgang geschaltet. | Parametriersignal Low | 22 Volt |
| Ausgang geschaltet. | Parametriersignal High | 24 Volt |

Die Spannungspegel und die Treiberpotentiale im Parametriergerät 19 und in der Sensoranordnung 10 sind so ausgelegt, dass in allen vier Zuständen die normale Funktion der Sensoranordnung 10 in Zusammenhang mit seiner angeschlossenen Last gewährleistet ist. Dies ist insbesondere bei digitalen SPS-Eingängen zu beachten. Hierbei wird im elektrischen Gerät 16 der Zustand "Aus" (Messwert unter Schaltgrenzwert) bei Spannungen < 5 Volt und der Schaltzustand "Ein" (Messwert über Schaltgrenzwert) bei Spannungen über 15 Volt erkannt. Die Parametrierbits haben somit keinen Einfluss auf die Erkennung des Schaltzustands der Sensoranordnung 10 bzw. des Schalttransistors 22.

Beim Senden der positiven Flanke des ersten Parametrierbits (Start der Parametrierung) behält die Sensoranordnung 10 ihren augenblicklichen Schaltzustand bei, friert ihn sozusagen ein. Bleibt das Signal des Parametrierbits für eine vorgegebene Zeit stabil im High-Zustand, so akzeptiert die Sensoranordnung den Parametrierstart, andernfalls arbeitet die Sensoranordnung 10 normal weiter. Die Kommunikation bei der Parametrierung kann mit einem festgelegten Protokoll in beide Richtungen erfolgen, wobei die Bit-Länge beispielsweise 0,5 ms und die Wort-Länge zum Beispiel 16 Bit betragen kann und der Ablauf genau festgelegt sein muss.

Das festgelegte Protokoll zur Parametrierung kann in Sendezyklen unterteilt sein, wobei der Sensor nach jedem Sendezyklus seinen Schaltzustand ändern kann. Die Länge eines solchen Zyklus muss festgelegt werden und beträgt beispielsweise 1 - 2 ms. Die einzelnen Bits der Übertragung können beispielsweise über den Spannungspegel bei gleicher Zeitbasis im Parametriergerät 19 und in der Sensoranordnung 10 codiert werden (UART) oder können durch die Impulslänge eines Parametrierimpulses festgelegt werden. Bei der zweiten Variante kann die Zeitbasis auch ungenauer sein, und nach jedem gesendeten Bit könnte eine Schaltzustandsänderung erfolgen.

Damit das Parametriergerät 19 für alle möglichen unterschiedlichen Sensoranordnungen verwendet werden kann, muss die Kommunikation für alle diese Sensoranordnungen einheitlich definiert werden. Im folgenden ist ein Kommunikationsablauf beispielhaft aufgeführt. Dabei wird das Parametriergerät 19 abgekürzt als PG und die Sensoranordnung abgekürzt als SA bezeichnet:
1. PG an SA Parametrierstart durch erstes Parametrierbit
2. SA an PG Sensor-Identifikation übertragen
3. PG an SA ersten eingestellten Parametrierwert anfragen
4. SA an PG ersten Parametrierwert mitteilen + übertragen
5. PG an SA zweiten eingestellten Parametrierwert anfragen
6. SA an PG zweiten Parametrierwert mitteilen + übertragen
7. PG an SA neue Parametrierung für ersten Parametrierwert übertragen (z. B. erster Schaltgrenzwert)
8. SA an PG Messwert übertragen
9. PG an SA neue Parametrierung für zweiten Parametrierwert übertragen (z. B. zweiter Schaltgrenzwert)
10. SA an PG Messwert übertragen

Die Parametrierung kann in vielfacher Weise erfolgen. Gemäß dem obigen Beispiel wurden Schaltgrenzwerte übertragen. Entsprechend kann eine Sensoranordnung auch dadurch parametriert werden, dass auf andere Schaltpunkte, Sensor- und/oder Schaltfunktionen, Sensor- und/oder Schaltcharakteristiken, Schaltzeiten, Sensoransprechschwellen, Hysteresen, Fensterfunktionen oder dergleichen übertragen werden. Dies hängt nicht zuletzt auch von der Art der jeweiligen Sensoranordnung ab, da Sensoranordnungen zur Messung unterschiedlicher Messwerte auch unterschiedliche Einstellungen erforderlich machen.

Das vorstehend aufgeführte Kommunikations-Protokoll kann selbstverständlich sehr unterschiedlich ausgelegt werden, zum Beispiel können auch mehr oder weniger unterschiedliche Messwerte angefragt werden. Es ist auch möglich, die Messwertübertragung während der Parametrierung ganz einzustellen bzw. auf den jeweiligen Messwert einzufrieren.

Das im Ausführungsbeispiel als separates Gerät ausgebildete Parametriergerät 19 kann beispielsweise auch im elektrischen Gerät 16 mitintegriert sein, beispielsweise in einem Eingangsmodul. Zur Unterstützung der Parametrierung können dann ein Display und Bedienelemente des elektrischen Geräts dienen. Das elektrische Gerät 16 kann mit einer höheren Befehlsebene oder über Internet vernetzt sein, so dass die Sensoranordnung 10 auch aus der Ferne parametriert werden kann. Bei einer Ausführung als separates Gerät kann das Parametriergerät 19 entfernt werden, um zur Parametrierung anderer Sensoren benutzt werden zu können.

In einer alternativen Ausgestaltung kann das Parametriergerät 19 auch in die Sensorsignalleitung S der Leitungsanordnung 15 geschaltet sein. Damit kann eine bidirektionale Kommunikation zwischen der Sensoranordnung 10 und dem Parametriergerät 19 unabhängig vom Schaltzustand der Sensoranordnung 10 und der Last erfolgen. Die Sensoranordnung 10 muss dabei nur die beiden Schaltzustände "Vaus" (Ausgang gesperrt, Potential nahe 0) und "Vein" (Ausgang geschaltet, Potential unterhalb dem Plus-Potential über einen durchgesteuerten Transistor) einnehmen können. Die Parametrierung wird dann vom Parametriergerät 19 immer durch ein Plus-Potential eingeleitet. Die Sensoranordnung 10 kann dies im Schaltzustand Vaus durch die Spannungsänderung an seinem Ausgang erkennen. Im Schaltzustand Vein kann er über den Ausgangsstrom erfassen, ob ein externes Plus-Potential auf die Ausgangsleitung aufgeschaltet wurde. Die Erkennung des Ausgangsstroms erfolgt beispielsweise über einen externen Shunt. Es können somit drei Bereiche für den Laststrom am Shunt unterschieden werden:
1. Überlast (Strom größer als z.B. 100 mA,
2. Normalbetrieb bzw. Ausgang geschaltet (Strom zwischen z.B. 4 und 100 mA) und
3. Hochohmige Last oder Parametrierung (Strom unter 4 mA).

Da somit von der Sensoranordnung 10 auf diese Weise die Einleitung des Parametriervorgangs erkannt wurde, beginnt der Datenaustausch mit dem Parametriergerät 19 über die Ausgangsleitung unter Verwendung der beiden Schaltzustände (Vaus, Vein). Ist die Sensoranordnung 10 auf Empfang, ist der Schaltzustand immer 0-Potential (Vaus). Das Parametriergerät 19 gibt den innerhalb der digitalen Kommunikation ermittelten Schaltzustand an die Last weiter (z.B. 12 Bit Wortlänge, 300 baud). Damit ist eine Schaltzustandsänderung alle 40 ms möglich.

Die Erfindung ist nicht auf Sensoranordnungen mit digitalen Ausgangssignalen beschränkt, sondern kann auch für Sensoranordnungen mit analogen Ausgangssignalen eingesetzt werden. Die Übertragung der Parametriersignale kann beispielsweise durch Modulation dieser Analogsignale erfolgen, oder aber sie werden während der Parametrierung abgeschaltet oder unterdrückt.

## Patentansprüche

1. Vorrichtung mit einer Sensoranordnung (10) zur Erfassung wenigstens eines Messwerts, welche wenigstens ein sensitives Element (11), aufweist das über eine eine Speicheranordnung (13) aufweisende Sensorelektronik (12) mit einem Eingangs/Ausgangsport (14) verbunden ist, mit einer wenigstens drei Leitungen aufweisenden Leitungsanordnung (15), durch die der Eingangs/Ausgangsport (14) mit einem externen elektrischen oder elektronischen Gerät (16) verbindbar ist, wobei zwei Leitungen als Spannungsversorgungsleitungen (P, N) und wenigstens eine dritte Leitung als Sensorsignalleitung (S) zur Übertragung von Sensorsignalen zum elektrisehen oder elektronischen Gerät (16) ausgebildet sind, und mit einer externen, mit der wenigstens einen Sensorsignalleitung (S) verbindbaren Parametriereinrichtung (17; 19) zur Zuführung von Parametriersignalen zur Sensorelektronik (12), um die Sensoranordnung (10) durch Speicherung von Parametrierwerten zu parametrieren, **dadurch gekennzeichnet, dass** die Parametriereinrichtung (17) zur Erzeugung eines Übernahmesignals ausgebildet ist, durch das der augenblicklich anliegende Messwert als wenigstens ein Schalt- oder Schwellwert in die Speicheranordnung (13) übernommen wird.

2. Vorrichtung nach Anspruch 1, **dadurch gekennzeichnet, dass** die Parametriereinrichtung (19) als Eingangsmodul in einem externen elektronischen Gerät (16) angeordnet oder als separates Parametriergerät ausgebildet ist.

3. Vorrichtung nach Anspruch 2, **dadurch gekennzeichnet, dass** zur Parametrierung ein festgelegtes, in beiden Richtungen wechselnd ablaufendes Parametrier-Protokoll vorgesehen ist.

4. Vorrichtung nach einem der Ansprüche 2 bis 3, **dadurch gekennzeichnet, dass** die Parametriereinrichtung (19) mit einem Display (20) und Bedienungselementen (21) versehen ist.

5. Vorrichtung nach einem der Ansprüche 2 bis 4, **dadurch gekennzeichnet, dass** die Parametriereinrichtung (19) zur Übertragung von Parametriersignalen ausgebildet ist, insbesondere zur Einstellung von Schaltpunkten, Sensor- und/oder Schaltfunktionen, Sensor- und/oder Schaltcharakteristiken, Schaltzeiten, Sensoransprechschwellen, Hysteresen oder Fensterfunktionen.

6. Vorrichtung nach einem der vorhergehenden Ansprüche, **dadurch gekennzeichnet, dass** die Sensorsignale digital in Form von wenigstens zwei unterschiedlichen Signalpegeln vorliegen.

7. Vorrichtung nach einem der Ansprüche 2 bis 6, **dadurch gekennzeichnet, dass** die Parametriersignale als digitale Signalfolgen erzeugbar und den jeweils vorliegenden Sensorsignalen überlagerbar sind.

8. Vorrichtung nach Anspruch 7, **dadurch gekennzeichnet, dass** die Signalpegel der überlagerten Parametriersignale derart kleiner als die Sensorsignalpegel sind, dass sie bei der Erkennung der Sensorsignalpegel unbeachtlich sind.

9. Vorrichtung nach Anspruch 3, **dadurch gekennzeichnet, dass** das Parametrier-Protokoll ein durch die Sensorelektronik (12) überprüfbares Startbit besitzt, wobei Mittel zur Beibehaltung des augenblicklich anliegenden Sensorsignals während einer festlegbaren Erkennungszeit vorgesehen sind.

10. Vorrichtung nach Anspruch 3 oder 9, **dadurch gekennzeichnet, dass** die Sensorelektronik (12) Mittel zur Beibehaltung des augenblicklich anliegenden Sensorsignals für eine vorgebbare Zeit während der Parametrierung besitzt, die größer als ein Sendezyklus des Parametrier-Protokolls ist.

11. Vorrichtung nach einem der vorhergehenden Ansprüche, **dadurch gekennzeichnet, dass** die Parametriereinrichtung (17) als Teach-in- oder Kurzschlussschalter ausgebildet ist.

## Claims

1. Device with a sensor assembly (10) for the detection of at least one measured value, and which has at least one sensitive element (11) connected to an input/output port (14) via sensor electronics (12) with a memory assembly (13), with a line assembly (15) having at least three lines, by means of which the input/output port (14) may be connected to an external electrical or electronic device (16), wherein two lines are designed as power supply lines (P, N) and at least one third line is a sensor signal line (S) for the transmission of sensor signals to the electrical or electronic device (16), and with an external parameterising device (17; 19) connectable to the sensor signal line or lines (S) to supply parameterising signals to the sensor electronics (12), in order to parameterise the sensor assembly (10) through the storage of parametrisation values, **characterised in that** the parameterising device (17) is designed to generate a transfer signal, through which the momentarily present measured value is accepted into the memory assembly (13) as at least one switching value or threshold.

2. Device according to claim 1, **characterised in that** the parameterising device (19) is provided as input module in an external electronic device (16) or is designed as a separate parametrisation unit.

3. Device according to claim 2, **characterised in that** a fixed parametrisation protocol running alternately in both directions is provided for parametrisation.

4. Device according to any of claims 2 to 3, **characterised in that** the parameterising device (19) is provided with a display (20) and control elements (21).

5. Device according to any of claims 2 to 4, **characterised in that** the parameterising device (19) is designed for the transmission of parameterising signals, in particular for the setting of switching points, sensor and other switching functions, sensor and other switching characteristics, switching times , sensor response thresholds, hystereses or window functions.

6. Device according to any of the preceding claims, **characterised in that** the sensor signals are provided digitally in the form of at least two different signal levels.

7. Device according to any of claims 2 to 6, **characterised in that** the parameterising signals may be generated as digital signal sequences and may be superimposed over the respectively current sensor signals.

8. Device according to claim 7, **characterised in that** the signal levels of the superimposed parameterising signals are lower than the sensor signal level to such an extent that they are insignificant in the detection of the sensor signal level.

9. Device according to claim 3, **characterised in that** the parametrisation protocol has a start bit which may be checked by the sensor electronics (12), wherein means are provided to retain the momentarily present sensor signal during a settable detection time.

10. Device according to claim 3 or 9, **characterised in that** the sensor electronics (12) have means for retaining the momentarily present sensor signal for a presettable time during the parametrisation, which is greater than the transmission cycle of the parametrisation protocol.

11. Device according to any of the preceding claims, **characterised in that** the parameterising device (17) is designed as a teach-in or short circuit switch.

## Revendications

1. Dispositif doté d'un ensemble détecteur (10) servant à détecter au moins une valeur de mesure, lequel système détecteur présente au moins un élément sensitif (11), qui est relié à un port d'entrée/de sortie (14) par l'intermédiaire d'un équipement électronique détecteur (12) présentant un ensemble de mémoire (13), doté d'un ensemble de lignes (15) présentant au moins trois lignes, lequel permet de relier le port d'entrée/de sortie (14) à un appareil externe électrique ou électronique (16), sachant que les deux lignes sont réalisées comme des lignes d'alimentation en tension (P, N) et qu'au moins une troisième ligne est réalisée comme une ligne pour signaux de capteur (S) servant à transmettre des signaux de capteur en direction de l'appareil électrique ou électronique (16), et doté d'un système de paramétrage (17 ; 19) externe pouvant être relié à la ligne pour signaux de capteur (S) au moins au nombre de une et servant à amener des signaux de paramétrage à l'équipement électronique détecteur (12) afin de paramétrer l'ensemble détecteur (10) par mémorisation de valeurs de paramétrage, **caractérisé en ce que** le système de paramétrage (17) est réalisé pour générer un signal de prise en charge, lequel permet de prendre en charge la valeur de mesure présente à ce moment en tant au moins qu'une valeur de commutation ou une valeur seuil dans l'ensemble de mémoire (13).

2. Dispositif selon la revendication 1, **caractérisé en ce que** le système de paramétrage (19) est disposé en tant que module d'entrée dans un appareil électronique externe (16) ou en tant qu'appareil de paramétrage séparé.

3. Dispositif selon la revendication 2, **caractérisé en ce qu'**un protocole de paramétrage fixe, se déroulant en alternance dans deux directions est prévu pour le paramétrage.

4. Dispositif selon l'une quelconque des revendications 2 à 3, **caractérisé en ce que** le système de paramétrage (19) est pourvu d'un écran (20) et d'éléments de commande (21).

5. Dispositif selon l'une quelconque des revendications 2 à 4, **caractérisé en ce que** le système de paramétrage (19) est réalisé pour transmettre des signaux de paramétrage, en particulier pour le réglage des points de commutation, des fonctions de détection et/ou des fonctions de commutation, des caractéristiques relatives à la détection et/ou à la commande, des temps de commutation, des hystérésis ou des fonctions fenêtre.

6. Dispositif selon l'une quelconque des revendications précédentes, **caractérisé en ce que** les signaux de capteur se présentent numériquement sous la forme d'au moins deux niveaux de signaux différents.

7. Dispositif selon l'une quelconque des revendications 2 à 6, **caractérisé en ce que** les signaux de paramétrage peuvent être générés sous la forme de suites de signaux numériques et peuvent être superposés avec des signaux de capteur respectivement présents.

8. Dispositif selon la revendication 7, **caractérisé en ce que** les niveaux de signaux des signaux de paramétrage superposés sont plus petits que les niveaux de signaux de capteur, **en ce qu'**ils sont insignifiants lors de l'identification des niveaux de signaux de capteur.

9. Dispositif selon la revendication 3, **caractérisé en ce que** le protocole de paramétrage présente un bit de départ pouvant être contrôlé par l'équipement électronique détecteur (12), sachant que des moyens pour le maintien du signal de capteur présent à ce moment sont prévus lors du temps de reconnaissance pouvant être fixé.

10. Dispositif selon la revendication 3 ou 9, **caractérisé en ce que** l'appareil électronique détecteur (12) possède des moyens pour le maintien du signal de capteur présent à ce moment pour une durée pouvant être prédéfinie pendant le paramétrage, qui est supérieure au cycle d'émission du protocole de paramétrage.

11. Dispositif selon l'une quelconque des revendications précédentes, **caractérisé en ce que** le système de paramétrage (17) est réalisé comme un commutateur colloque ou un commutateur de magnéto.
